# EUROPEAN PATENT APPLICATION

(11) **EP 4 401 455 A1**
(43) Date of publication of application: **17.07.2024**
(21) Application number: 21956729.4
(22) Date of filing: 08.09.2021
(51) Int. Cl.: H04W 16/32, H04W 72/04, H04W 76/15

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/032968
(87) International publication number: WO 2023/037432

(57) **Abstract**

A terminal according to one aspect of the present disclosure includes: a receiving section that receives cell group configuration information including an indication indicating whether it is for operation for at least one of carrier aggregation and dual connectivity or for operation for inter-cell mobility using at least one of layer 1 and layer 2; and a control section that controls transmission/reception in a cell in a cell group indicated by the configuration information. According to one aspect of the present disclosure, it is possible to appropriately perform configuration related to a cell.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied that one or a plurality of cells / transmission/reception points (TRPs) (multi-TRP (MTRP)) perform DL transmission to a UE.

When multi-TRP is applied, there is a possibility that a serving cell is changed to a cell with a PCI different from that of the serving cell by signaling using at least one of layer 1 and layer 2 (L1/L2 inter-cell mobility (layer 1 / layer 2 inter-cell mobility)). In a case where L1/L2 inter-cell mobility is performed, unless configuration related to a cell is performed appropriately, a problem such as a decrease in communication throughput may occur.

Thus, an object of the present disclosure is to provide a terminal, a radio communication method, and a base station that can appropriately perform configuration related to a cell.

### Solution to Problem

A terminal according to one aspect of the present disclosure includes: a receiving section that receives cell group configuration information including an indication indicating whether it is for operation for at least one of carrier aggregation and dual connectivity or for operation for inter-cell mobility using at least one of layer 1 and layer 2; and a control section that controls transmission/reception in a cell in a cell group indicated by the configuration information. Advantageous Effects of Invention

According to one aspect of the present disclosure, it is possible to appropriately perform configuration related to a cell.

### Brief Description of Drawings

[FIG. 1] FIG. 1A shows an example of inter-cell mobility including a non-serving cell (for example, single-TRP inter-cell mobility). FIG. 1B shows an example of inter-cell mobility when multi-TRP is used.
[FIG. 2] FIG. 2 is a diagram to show an overview of a serving cell configuration (ServingCellConfig).
[FIG. 3] FIG. 3 is a diagram to show an overview of a cell group configuration (CellGroupConfig).
[FIG. 4] FIG. 4A is a diagram to show an example of an HARQ entity for each cell in a MAC entity. FIG. 4B is a diagram to show an example of a cell group configuration corresponding to FIG. 4A.
[FIG. 5] FIG. 5 is a diagram to show an example of a cell group configuration of option 1-1-1.
[FIG. 6] FIG. 6 is a diagram to show an example of a cell group configuration of option 1-1-2.
[FIG. 7] FIG. 7A is a diagram to show an example of a MAC entity / HARQ entities when a cell group for CA/DC operation is configured. FIG. 7B is a diagram to show an example of a cell group configuration corresponding to FIG. 7A.
[FIG. 8] FIG. 8A is a diagram to show an example of a MAC entity / HARQ entity when a cell group for L1/L2 inter-cell mobility operation is configured. FIG. 8B is a diagram to show an example of a cell group configuration corresponding to FIG. 8A.
[FIG. 9] FIG. 9 is a diagram to show an example of a MAC entity / HARQ entities in a first embodiment.
[FIG. 10] FIG. 10A to FIG. 10C are each a diagram to show an example of a cell group configuration corresponding to FIG. 9.
[FIG. 11] FIG. 11 is a diagram to show a first example of a serving cell group configuration (ServCellGroupConfig).
[FIG. 12] FIG. 12 is a diagram to show a second example of the serving cell group configuration (ServCellGroupConfig).
[FIG. 13] FIG. 13 is a diagram to show an example of a MAC entity / HARQ entities in a second embodiment.
[FIG. 14] FIG. 14A to FIG. 14C are each a diagram to show an example of a cell group configuration corresponding to FIG. 13.
[FIG. 15] FIG. 15A is a diagram to show an example of a cell configuration before L1/L2 inter-cell mobility. FIG. 15B is a diagram to show an example of a cell configuration after L1/L2 inter-cell mobility in option 3-1. FIG. 15C is a diagram to show an example of a cell configuration after L1/L2 inter-cell mobility in option 3-2.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (Multi-TRP)

It is studied that one or a plurality of cells / transmission/reception points (TRPs) (multi-TRP (MTRP)) perform DL transmission to a UE. It is also studied that the UE performs UL transmission to one or a plurality of cells/TRPs. As a procedure in this case, scenario 1 or scenario 2 below is considered. Note that, in the present disclosure, a serving cell may be interpreted as a TRP in a serving cell. Layer 1 / layer 2 (L1/L2) signaling and a MAC CE / DCI may be interchangeably interpreted. In the present disclosure, a physical cell ID (Physical Cell Identity (PCI)) different from the PCI of the current serving cell is simply referred to as a "different PCI" in some cases. In scenario 1, the following procedure is performed, for example.

### <Scenario 1>

Scenario 1 corresponds, for example, to multi-TRP inter-cell mobility but may be a scenario not corresponding to multi-TRP inter-cell mobility.

(1) A UE receives, from a serving cell, the configuration of an SSB for beam measurement for a TRP corresponding to a PCI different from that of the serving cell and a configuration that includes the resource of the different PCI and is necessary in order to use a radio resource for data transmission/reception.
(2) The UE performs beam measurement for the TRP corresponding to the different PCI and reports a beam measurement result to the serving cell.
(3) Based on the above report, a TCI state associated with the TRP corresponding to the different PCI is activated by L1/L2 signaling from the serving cell.
(4) The UE uses a UE-dedicated channel of the TRP corresponding to the different PCI to perform transmission/reception.
(5) The UE needs to cover the serving cell all the time including a case of multi-TRP. The UE, similarly to a known system, needs to use a common channel (broadcast control channel (BCCH), a paging channel (PCH)) or the like from the serving cell.

In scenario 1, when the UE transmits/receives a signal to/from a non-serving cell/TRP (TRP corresponding to the PCI of the non-serving cell), the serving cell (assumption of a serving cell in the UE) is not changed. The UE is configured with a higher layer parameter related to the PCI of the non-serving cell by the serving cell. Scenario 1 may be applied in Rel. 17, for example.

### <Scenario 2>

In scenario 2, L1/L2 inter-cell mobility is applied. In L1/L2 inter-cell mobility, serving cell change is possible by using a function such as beam control without performing RRC reconfiguration. In other words, transmission/reception with the non-serving cell is possible without performing handover. Since a data incommunicable period occurs due to the necessity of RRC reconnection and the like for handover, application of L1/L2 inter-cell mobility with no necessity of handover allows data communication to continue even at the time of serving cell change. Scenario 2 may be applied in Rel. 18, for example. In scenario 2, the following procedure is performed, for example.

(1) The UE receives, from the serving cell, the configuration of an SSB of a cell (non-serving cell) with a different PCI, for beam measurement / serving cell change.
(2) The UE performs beam measurement for the cell using the different PCI and reports a measurement result to the serving cell.
(3) The UE may receive the configuration of the cell with the different PCI (serving cell configuration) by higher layer signaling (for example, RRC). In other words, previous configuration related to serving cell change may be performed. This configuration may be performed together with or separately from the configuration in (1).
(4) Based on the above report, the TCI state of the cell with the different PCI may be activated by L1/L2 signaling according to the serving cell change. The activation of the TCI state and the serving cell change may be performed separately.
(5) The UE changes the serving cell (assumption of a serving cell) and uses a UE-dedicated channel configured in advance and the TCI state to initiate reception/transmission.

In other words, in scenario 2, the serving cell (assumption of a serving cell in the UE) is updated by L1/L2 signaling.

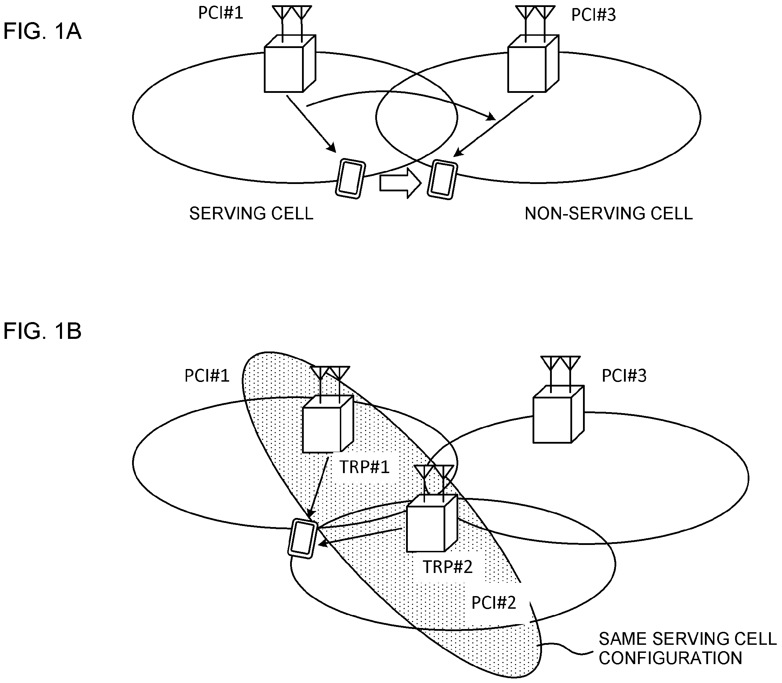

An example of a case where the UE receives channels/signals from a plurality of cells/TRPs in inter-cell mobility will be described by using FIGS. 1A and 1B.

FIG. 1A shows an example of inter-cell mobility including a non-serving cell (for example, single-TRP inter-cell mobility). The single TRP may mean a case where only one TRP of multi-TRP performs transmission to the UE (which may be referred to as a single mode). Here, a case where the UE receives channels/signals from a base station / TRP of cell #1 (PCI #1), which is a serving cell, and a base station/TRP of cell #3 (PCI #3), which is not a non-serving cell (Non-serving cell), is shown.

For example, the serving cell of the UE is switched from cell #1 to cell #3. In this case, a TCI state may be updated by DCI / MAC CE, and a port (for example, an antenna port) / TRP / point may be dynamically selected. By using DCI / MAC CE, the UE can change a cell/beam at a high speed.

FIG. 1B shows an example of inter-cell mobility when multi-TRP is used. Here, a case where the UE receives channels/signal from TRP #1 and TRP 2 is shown. Here, a case where TRP #1 is present in cell #1 (PCI #1) and TRP #2 is present in cell #2 (PCI #2) is shown. The serving cell configurations of cell #1 (PCI #1) and cell #2 (PCI #2) are assumed to be the same.

The multi-TRP (TRPs #1 and #2) may be connected to each other via ideal/non-ideal backhaul to exchange information, data, and the like. A different codeword (Code Word (CW)) and a different layer may be transmitted from each TRP of the multi-TRP. As a mode of multi-TRP transmission, non-coherent joint transmission (NCJT) may be used. In FIG. 1B, NCJT may be performed between a plurality of cells (cells with different PCIs).

In NCJT, for example, TRP #1 performs modulation mapping on a first codeword, performs layer mapping, and transmits a first signal/channel (for example, PDSCH) in layers of a first number (for example, two layers) by using first precoding. TRP #2 performs modulation mapping on a second codeword, performs layer mapping, and transmits a second signal/channel (for example, PDSCH) in layers of a second number (for example, two layers) by using second precoding.

A plurality of PDSCHs (multi-PDSCH) transmitted by NCJT may be defined to partially or entirely overlap in terms of at least one of the time and frequency domains. In other words, the first PDSCH from TRP #1 and the second PDSCH from TRP #2 may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). The one piece of DCI may be transmitted from one TRP of the multi-TRP. A configuration using one piece of DCI in multi-TRP may be referred to as single-DCI based multi-TRP (mTRP/MTRP).

A case where each TRP of the multi-TRP transmits part of a control signal to the UE and the multi-TRP transmits data signals (which may be referred to as a master-slave mode) may be applied.

The plurality of PDSCHs from the multi-TRP may be scheduled by using a plurality of pieces of DCI (multi-DCI (M-DCI), multi-PDCCH (multiple PDCCHs)) (multi-master mode). The plurality of pieces of DCI may be transmitted from the respective TRPs of the multi-TRP. A configuration using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

### <L1/L2 Inter-cell Mobility>

### {Configuration of Candidate Serving Cell}

An example of L1/L2 inter-cell mobility will be described. In a case of performing communication with one TRP (when a single-TRP is applied), L1/L2 inter-cell mobility of the UE may be configured only for a plurality of cells having serving cell configurations that are approximately the same.

In a case of performing communication with one TRP (when a single TRP is applied), the UE may receive configurations of a plurality of candidate serving cells, which are non-serving cells corresponding to a frequency, in advance by higher layer signaling (RRC reconfiguration signaling). Then, when the UE receives an indication indicating any one of the plurality of candidate serving cells by a MAC CE / DCI, the UE may change the serving cell (hand over) to the candidate serving cell indicated by the indication.

The UE may receive (be configured with) configurations of the plurality of candidate serving cells, which are non-serving cells corresponding to the frequency, by higher layer signaling (RRC reconfiguration signaling). Then, when the UE receives information related to QCL (QCL/TCI) of a non-serving cell by a MAC CE / DCI, the UE may change the serving cell (hand over) to the candidate serving cell corresponding to (related to) the non-serving cell and apply the QCL.

When a plurality of candidate serving cell configurations corresponding to the frequency are configured, the UE may simultaneously apply/maintain/support/hold, among the plurality of candidate serving cell configurations, at least two (a plurality of) candidate serving cell configurations. The UE may simultaneously perform communication with the plurality of serving cells corresponding to the plurality of candidate serving cell configurations.

### {Indication of Common TCI State}

The UE may receive information indicating a common TCI state associated with a different cell with a different physical cell ID (PCI) from the PCI of the serving cell. The common TCI state may be a TCI state applicable to a plurality of kinds of channels/signals. The common TCI state may be at least one of a first TCI state common to both downlink (DL) and uplink (UL), a second TCI state common to DL, and a third TCI state common to UL.

The first TCI state may be a TCI state applicable to a plurality of kinds of DL and UL channels/signals (joint TCI state). The second TCI state may be a TCI state applicable to a plurality of kinds of DL channels/signals (separate DL TCI state). The third TCI state may be a TCI state applicable to a plurality of kinds of UL channels/signals (separate UL TCI state).

The UE may receive information indicating the first to third TCI states by a MAC CE and DCI, for example. The UE may apply at least one of the first TCI state, the second TCI state, and the third TCI state indicated by the information, to a specific channel transmitted/received for the different cell.

### (Cell Configuration)

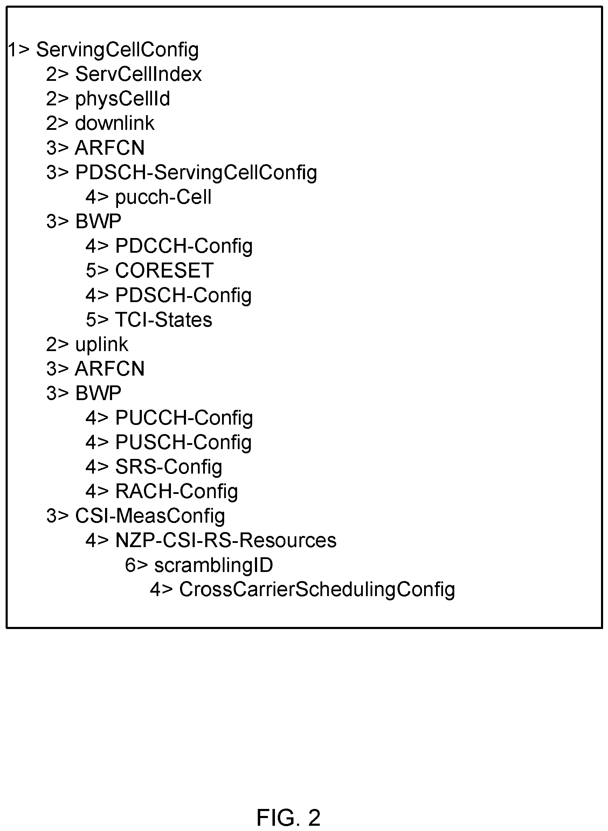

FIG. 2 is a diagram to show an overview of a serving cell configuration (ServingCellConfig). FIG. 2 uses Abstract Syntax Notation One (ASN.1), and notations "1>," "2>," ..., "6>" represent respective layers of a configuration. The drawings each showing a configuration in the present disclosure uses a similar notation and may correspond to RRC information elements (parameters). As shown in FIG. 2, the serving cell configuration includes at least a serving cell index (ServCellIndex), a physical cell ID (physCellId), downlink (configuration related to downlink), and uplink (configuration related to uplink).

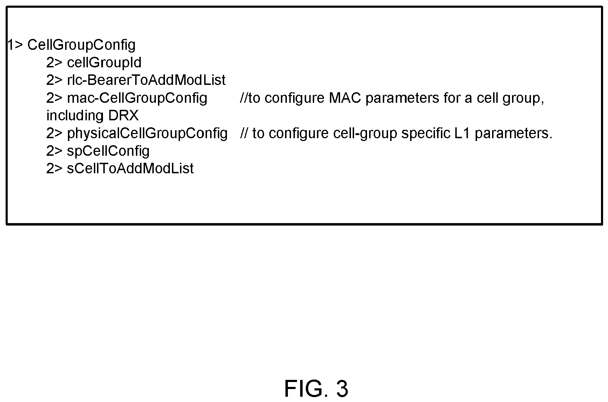

FIG. 3 is a diagram to show an overview of a cell group configuration (CellGroupConfig). The cell group configuration may be applied to a master cell group (MCG) or a secondary cell group (SCG) in carrier aggregation. As shown in FIG. 3, the cell group configuration includes a cell group ID, a list of association between a corresponding RLC (Radio Link Control) entity and a radio barer (rlc-BearerToAddModList), a MAC cell group configuration (mac-CellGroupConfig), a physical cell group configuration (physicalCellGroupConfig), a special cell configuration (spCellConfig), a list of secondary cells (sCellToAddModList).

Each base station (for example, an LTE base station / NR base station) includes a MAC (Medium Access Control) entity. A MAC entity is a process entity that performs MAC layer processing. The MAC layer processing includes at least one of logical channel multiplexing, retransmission control (HARQ (Hybrid Automatic Repeat reQuest)), scheduling, multiplexing of data over a plurality of carriers (CCs), and demultiplexing of the data, for example.

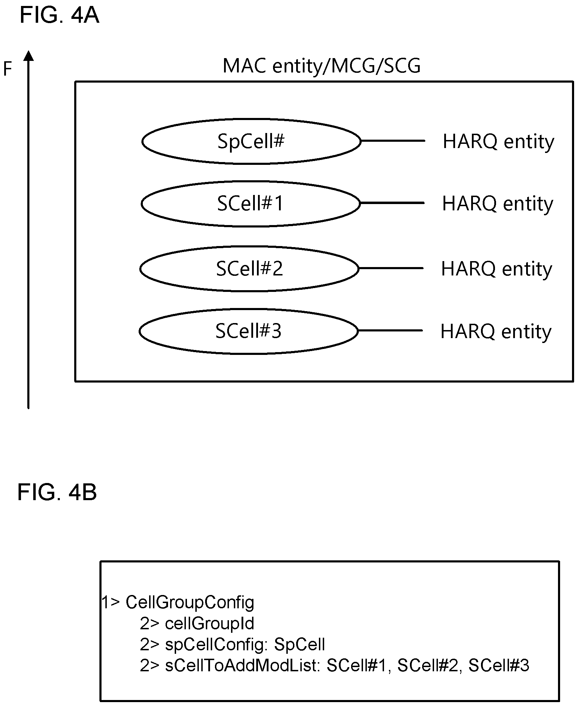

FIG. 4A is a diagram to show an example of an HARQ entity for each cell in a MAC entity. For the UE configured with carrier aggregation (CA) or dual connectivity (DC), one independent HARQ entity may be present for each cell (CC). Each HARQ entity may manage a plurality of HARQ processes in parallel.

FIG. 4B is a diagram to show an example of a cell group configuration corresponding to FIG. 4A. As shown in FIG. 4B, the cell group configuration includes a cell group ID (cellGroupId), a special cell configuration (spCellConfig), and a list of secondary cells (sCellToAddModList) .

### (Analysis)

A multi-TRP inter-cell configuration may be based on a single-cell configuration framework. Concepts of a TRP, a non-serving cell, and a cell with a PCI different from that of a serving cell are configured in a serving cell configuration. Inter-cell mobility in Rel. 17 (also referred to as inter-cell beam management) is also based on a single-cell configuration framework. This means that a cell with a different PCI is configured in a serving cell configuration.

However, there is a possibility that a serving cell is changed to a cell with a PCI different from that of the serving cell by L1/L2 signaling (L1/L2 inter-cell mobility). In L1/L2 inter-cell mobility in Rel. 18 and later versions, it is preferable that a new signaling configuration framework be studied. In a case where L1/L2 inter-cell mobility is performed, unless configuration related to a cell is performed appropriately, a problem such as a decrease in communication throughput may occur. Thus, the inventors of the present invention came up with the idea of a terminal capable of appropriately performing configuration related to a cell.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC control element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a cell, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a single TRP, single DCI, a single PDCCH, multi-TRP based on single DCI, a single TRP system, single TRP transmission, a single PDSCH, a channel using a single TRP, a channel using one TCI state / spatial relation, multi-TRP being not enabled by RRC/DCI, a plurality of TCI states / spatial relations being not enabled by RRC/DCI, one CORESET pool index (CORESETPoolIndex) value being not configured for any CORESET and any codepoint of a TCI field being not mapped to two TCI states, and two TCI states at at least one TCI codepoint being activated, may be interchangeably interpreted.

In the present disclosure, a cell, a serving cell, a CC, a BWP, a BWP in a CC, and a band may be interchangeably interpreted. In the present disclosure, a different cell, a non-serving cell, a cell with a different PCI, a candidate serving cell, a cell with a PCI different from the PCI of a current serving cell, and a different serving cell may be interchangeably interpreted.

In the present disclosure, multi-TRP, a multi-TRP system, multi-TRP transmission, multi-PDSCH, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, a cell group, a serving cell group, a master cell group (MCG), and a secondary cell group (SCG) may be interchangeably interpreted. L1/L2, L1/L2 signaling, and a MAC CE / DCI may be interchangeably interpreted. "For CA/DC operation" may mean corresponding to / related to CA/DC or applied to CA/DC. "For L1/L2 inter-cell mobility operation" may mean corresponding to / related to L1/L2 inter-cell mobility or applied to L1/L2 inter-cell mobility. A serving cell may be replaced with a cell that transmits a PDSCH. A candidate cell may mean a cell being a candidate to be a serving cell by L1/L2 inter-cell mobility.

### (Radio Communication Method)

### <First Embodiment>

The UE may reuse a CA/DC framework for L1/L2 inter-cell mobility operation and receive, for each cell group, a cell group configuration (CellGroupConfig) (cell group configuration information) including a new indication explicitly/implicitly indicating whether it is for CA/DC operation or for L1/L2 inter-cell mobility operation, by higher layer signaling (for example, RRC signaling). The indication may be a new RRC parameter or an existing RRC parameter (for example, a cell group ID). The UE may control transmission/reception in a cell in a cell group indicated in the configuration information. A plurality of cells at the same frequency having a possibility to be a serving cell may be used for L1/L2 inter-cell mobility operation. Control in the present disclosure is applied in Rel. 18 and later versions, for example.

### {Option 1-1-1}

The UE may receive cell group configuration information including a new indication (new RRC parameter) indicating whether a cell group (cell group configuration) is for CA/DC operation or for L1/L2 inter-cell mobility operation (cell group purpose).

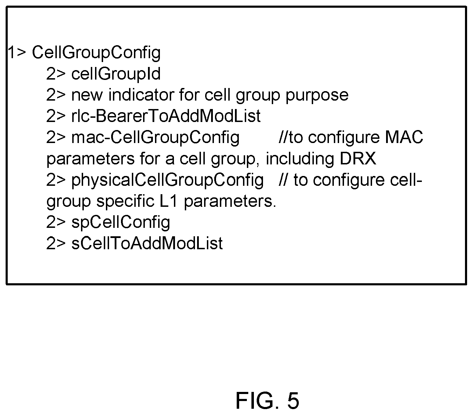

FIG. 5 is a diagram to show an example of a cell group configuration of option 1-1-1. "new indicator for cell group purpose" in FIG. 5 is a new RRC parameter in this option. "new indicator for cell group purpose" may be, for example, one-bit information and indicate that the cell group is for CA/DC operation when the value is 1 (or 0) while indicating that the cell group is for L1/L2 inter-cell mobility operation when the value is 0 (or 1).

### {Option 1-1-2}

The UE may receive a cell group ID (cellGroupId) indicating whether a cell group (cell group configuration) is for CA/DC operation or for L1/L2 inter-cell mobility operation. This cell group ID takes a different value depending on whether the cell group is for CA/DC operation or for L1/L2 inter-cell mobility operation. In other words, by reusing a cell group ID, which is an existing RRC parameter, a cell group purpose can be implicitly indicated. This allows the cell group purpose to be indicated without any increase from existing RRC parameters.

For example, as in Rel. 17, cellGroupId = 0 may indicate a master cell group for CA/DC, cellGroupId = 1 may indicate a secondary cell group for CA/DC, and cellGroupId ≥ 2 may indicate a cell group to be used for L1/L2 inter-cell mobility.

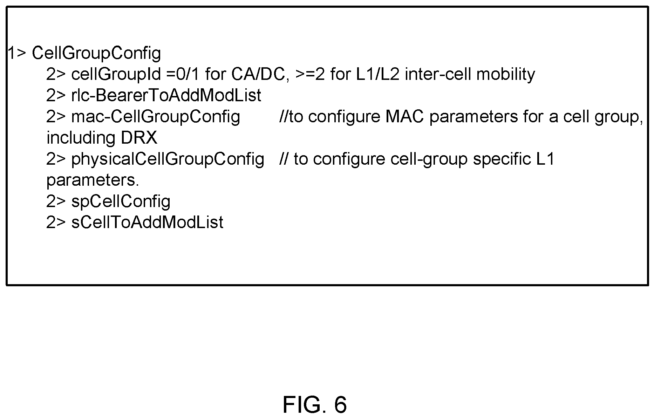

FIG. 6 is a diagram to show an example of a cell group configuration of option 1-1-2. As described above, cellGroupId = 0 or 1 indicates a master/secondary cell group for CA/DC, and cellGroupId ≥ 2 indicates a cell group to be used for L1/L2 inter-cell mobility. However, the value of cellGroupId is not limited to these examples.

Note that, in Rel. 18 and later versions, three or more cell groups may be supported in CA/DC. When three cell groups are supported, cellGroupId = 0 may indicate a master cell group for CA/DC, cellGroupId = 1 may indicate a secondary cell group for CA/DC, and cellGroupId = 2 may indicate a third cell group for CA/DC, for example. cellGroupId ≥ 3 may indicate a cell group for L1/L2 inter-cell mobility.

As an RRC parameter implicitly indicating whether the cell group is for CA/DC operation or for L1/L2 inter-cell mobility operation, a different parameter in the cell group configuration may be used. For example, when a secondary cell is configured in sCellToAddModList, this may indicate that the cell group is for CA/DC operation, and when a candidate cell is configured in sCellToAddModList, this may indicate that the cell group is for L1/L2 inter-cell mobility operation.

### {MAC Entity / HARQ Entity(ies)}

A description will be given of a difference between when an above-described explicit/implicit new indication indicates that the cell group is for L1/L2 inter-cell mobility operation and when the new indication indicates that the cell group is for CA/DC operation.

### {{MAC Entity}}

When it is indicated that the cell group is for L1/L2 inter-cell mobility operation, no independent MAC entity for the cell group may be configured.

### {{HARQ Entity(ies)}}

(Example 1) Separate HARQ entities need not be used for the respective cells in a cell group. Specifically, all the cells in the cell group may share an HARQ entity and share all the HARQ process IDs.
(Example 2) Alternatively, separate HARQ entities may be used for the respective cells in a cell group. For example, a different HARQ entity may be used for the frequency corresponding to each cell.

### {Parameter Interpretation When CA/DC Configuration Signaling (framework) is Reused for L1/L2 Inter-cell Mobility Operation}

A description will be given of each parameter in CA/DC configuration signaling to be reused for a new cell group purpose (L1/L2 inter-cell mobility).

"SpCell" means a "current serving cell before L1/L2 mobility at a certain frequency" in the new cell group purpose.

"SCell" means a "candidate cell for L1/L2 mobility at the frequency of the current serving cell" in the new cell group purpose.

A physical cell group configuration (physicalCellGroupConfig) means a "cell-group-specific parameter configuration common to all the cells in a cell group" in the new cell group purpose.

### {Parameter When Cell Group is for L1/L2 Inter-Cell Mobility Operation}

A description will be given of a meaning of each parameter when a new cell group purpose is configured to be for L1/L2 inter-cell mobility operation. A candidate cell may mean a candidate for a new serving cell after L1/L2 inter-cell mobility operation.

### {Option 1-2-1}

Any serving cell (SpCell/SCell) may be configured together with a plurality of candidate cells in a cell group. Specifically, when a CA/DC framework is reused, any serving cell (SpCell/SCell) may be included in "spCellConfig" as the current serving cell for L1/L2 mobility.

### {Option 1-2-2}

A cell configured together with a plurality of candidate cells in a cell group may be only an SpCell. Specifically, when a CA/DC framework is reused, only an SpCell may be included in "spCellConfig" as the current serving cell for L1/L2 mobility while an SCell need not be included in "spCellConFIG."

### {Option 1-2-3}

A cell configured together with a plurality of candidate cells in a cell group may be only an SCell. Specifically, when a CA/DC framework is reused, only an SCell may be included in "spCellConfig" as the current serving cell for L1/L2 mobility while an SpCell need not be included in "spCellConFIG."

For a new purpose (L1/L2 inter-cell mobility) of a cell group, the maximum number of a plurality of candidate cells corresponding to the serving cell at the same frequency for L1/L2 inter-cell mobility (configured in sCellToAddModList, this may be different for each serving cell), the maximum number of serving cells configurable in "spCellConfig," the maximum number of cell groups for L1/L2 inter-cell mobility, and the maximum number of cells included in all the cell groups for L1/L2 inter-cell mobility (per MCG/SCG) may be configured.

These maximum numbers may be defined in a specification or may be configured for the UE by higher layer signaling or the like. The UE may report these maximum numbers as UE capability information and receive a configuration corresponding to the report by higher layer signaling or the like.

### {Concrete Example}

An example of a cell group configuration and a MAC entity / HARQ entity(ies) in the present embodiment will be described.

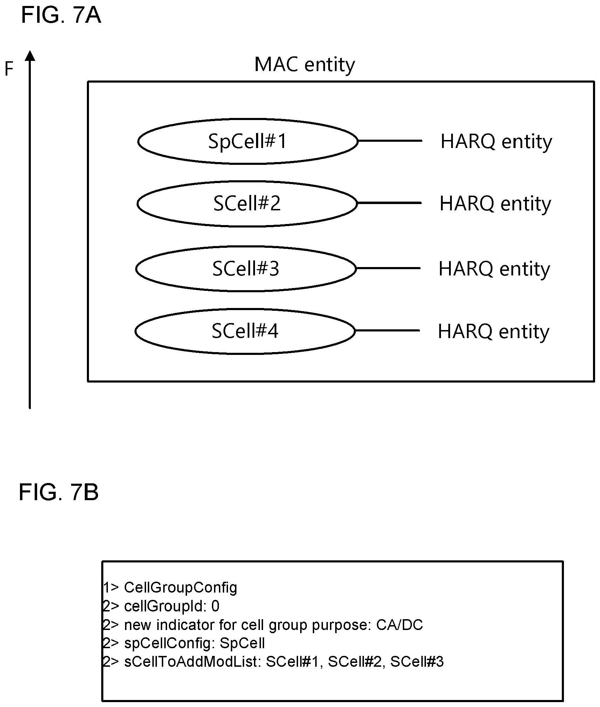

FIG. 7A is a diagram to show an example of a MAC entity / HARQ entities when a cell group for CA/DC operation is configured. In FIG. 7A, a different HARQ entity is used for each cell in a MAC entity corresponding to a cell group (MCG/SCG). Each cell corresponds to a different frequency.

FIG. 7B is a diagram to show an example of a cell group configuration corresponding to FIG. 7A. cellGroupId = 0 in FIG. 7B shows a cell group for CA/DC (for example, a master cell group). "new indicator for cell group purpose" indicates that the cell group is for CA/DC operation.

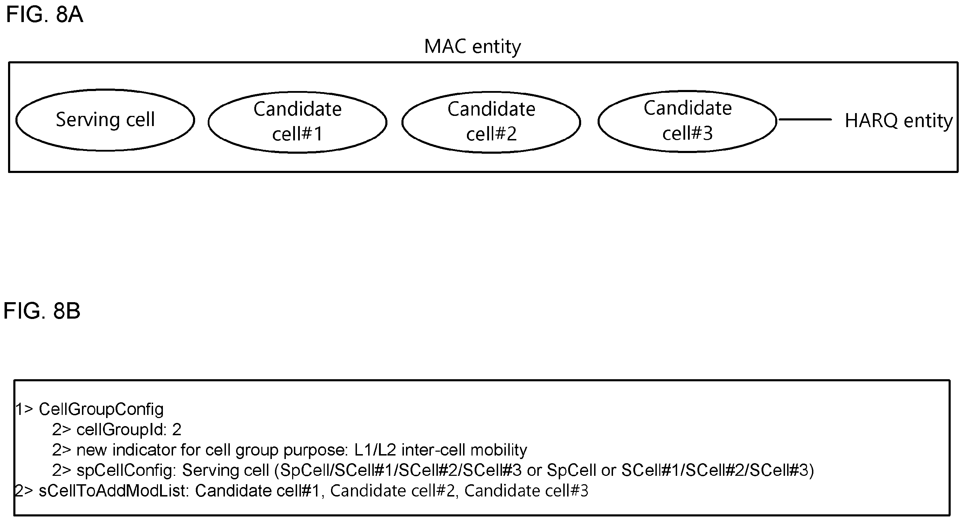

FIG. 8A is a diagram to show an example of a MAC entity / HARQ entity when a cell group for L1/L2 inter-cell mobility operation is configured. In FIG. 8A, (one) HARQ entity common to a plurality of cells is used for MAC entity corresponding to a cell group. The cells correspond to the same frequency. FIG. 8A corresponds to example 1 in {{HARQ Entity}} described above.

FIG. 8B is a diagram to show an example of a cell group configuration corresponding to FIG. 8A. cellGroupId = 2 in FIG. 8B shows a cell group for L1/L2 inter-cell mobility. "new indicator for cell group purpose" indicates that the cell group is for L1/L2 inter-cell mobility operation.

In "spCellConfig," a serving cell(s) corresponding to any of options 1-2-1 to 1-2-3 is configured. For "spCellConfig," for example, when option 1-2-1 is applied, "SpCell / SCell #1 / SCell #2 / SCell #3" may be configured, when option 1-2-2 is applied, "SpCell" may be configured, and when option 1-2-3 is applied, "SCell #1 / SCell #2 / SCell #3" may be configured.

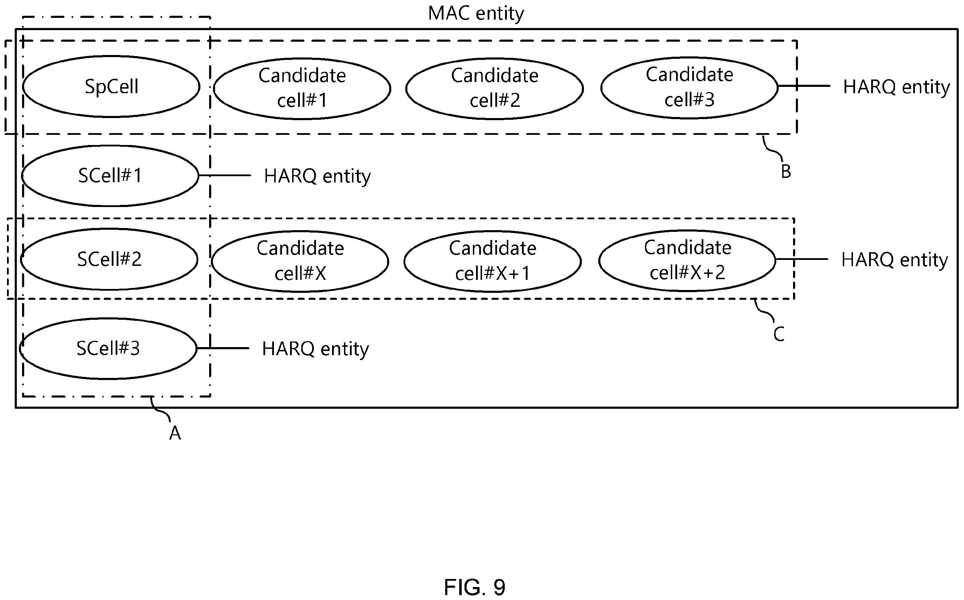

FIG. 9 is a diagram to show an example of a MAC entity / HARQ entities in the first embodiment. The cells in a frame with A in FIG. 9 are cells in a cell group for CA/DC operation (MCG/SCG). Each cell corresponds to a different frequency. The cells in a frame with B in FIG. 9 are cells in a cell group for L1/L2 inter-cell mobility operation, and this is an example of a case where the serving cell is an SpCell. The cells in B correspond to the same frequency. The cells in a frame with C in FIG. 9 are cells in a cell group for L1/L2 inter-cell mobility operation, and this is an example of a case where the serving cell is an SCell. The cells in C correspond to the same frequency.

In other words, each cell corresponds to a different frequency (CC) in CA/DC, but the cells (cells with different PCIs) correspond to the same frequency (CC) in L1/L2 inter-cell mobility (multi-TRP). Candidate cell #X in C may be different from candidate cell #1 in B (different in terms of PCI/frequency). X may be a recreated index at a certain frequency and may start from 1, for example. The recreated index corresponds to at least part of the PCI and may be an index created for the candidate cell.

In another example, each cell (SpCell/Scell, Candidate cell) may correspond to a different frequency even in a case of L1/L2 inter-cell mobility. However, the cells may share the same HARQ entity corresponding to PDSCH scheduling.

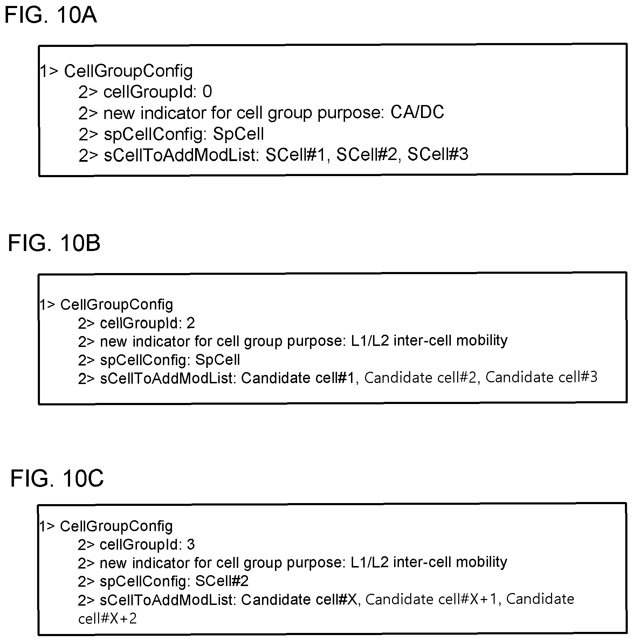

FIG. 10A to FIG. 10C are each a diagram to show an example of a cell group configuration corresponding to FIG. 9. FIG. 10A to FIG. 10C correspond to cells (cell groups) in the frames with A, B, and C in FIG. 9, respectively. "cellGroupId," "new indicator for cell group purpose," "spCellConfig," and "sCellToAddModList" correspond to the cells (cell groups) in the frames with A, B, and C in FIG. 9.

In the first embodiment, by reusing a CA/DC framework for L1/L2 inter-cell mobility operation, it is possible to perform cell group configuration related to L1/L2 inter-cell mobility without adding any new RRC information element.

### <Second Embodiment>

The UE may receive configuration information related to a serving cell group (referred to below as a serving cell group configuration ("ServCellGroupConfig") in some cases) by higher layer signaling (RRC signaling) for L1/L2 inter-cell mobility operation. The UE controls transmission/reception in a cell in a cell group indicated by the configuration information related to a serving cell group. Control in the present disclosure may be applied in Rel. 18 and later versions, for example. In the present disclosure, the name of the configuration information is referred to as "ServCellGroupConfig," but a different name may be used. A "different PCI" means a PCI different from that of the serving cell. A serving cell group configuration and a specific RRC parameter may be interchangeably interpreted.

The UE may be configured with a plurality of cells (for example, candidate cells) with different PCIs in the serving cell group corresponding to a serving cell / CC by higher layer signaling, in association with the serving cell.

### {HARQ Entity(ies)}

(Example 1) Separate HARQ entities need not be used for the respective cells in a serving cell group. Specifically, all the cells in the cell group may share an HARQ entity with the serving cell and share all the HARQ process IDs.
(Example 2) Separate HARQ entities may be used for the respective cells in a serving cell group. For example, a different HARQ entity may be used for the frequency corresponding to each cell.

The UE may be configured with information (information element) including a common parameter applied to a serving cell in the serving cell group and a plurality of cells in the serving cell group with a PCI different from that of the serving cell, by higher layer signaling.

The serving cell group configuration may be included in a cell group configuration (CellGroupConfig) corresponding to CA/DC or a serving cell configuration (ServingCellConfig) or may be associated with the cell group configuration corresponding to CA/DC or the serving cell configuration.

### {Option 2-1}

For any serving cell (SpCell/SCell), a new serving cell group may be configured. In other words, any serving cell may be configured together with a serving cell group with a plurality of candidate cells for L1/L2 inter-cell mobility.

### {Option 2-2}

Only for an SpCell, a new serving cell group may be configured. In other words, only an SpCell may be configured together with a serving cell group with a plurality of candidate cells for L1/L2 inter-cell mobility.

### {Option 2-3}

Only for an SCell, a new serving cell group may be configured. In other words, only an SCell may be configured together with a serving cell group with a plurality of candidate cells for L1/L2 inter-cell mobility.

For the serving cell group configuration, the maximum number of the plurality of candidate cells for a serving cell at the same frequency for L1/L2 inter-cell mobility (configured in "CandidateCellList") (which may be different for each serving cell), the maximum number of serving cells configurable in the serving cell group, and the maximum number of cells configured in all the serving cell group configurations (per MCG/SCG) may be different.

These maximum numbers may be defined in a specification or may be configured for the UE by higher layer signaling or the like. The UE may report these maximum numbers as UE capability information and receive a configuration corresponding to the report by higher layer signaling or the like.

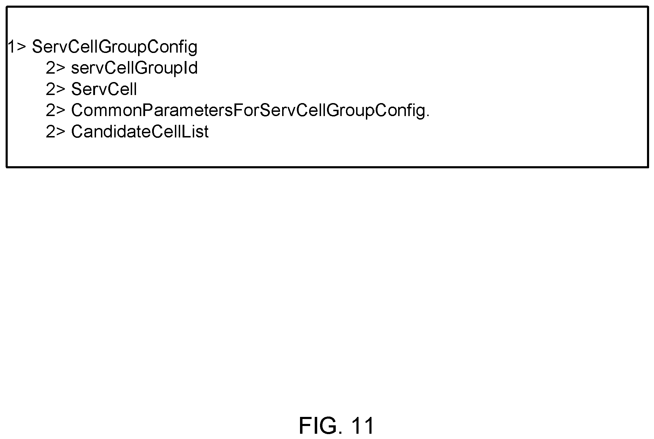

FIG. 11 is a diagram to show a first example of a serving cell group configuration (ServCellGroupConfig). The serving cell group configuration includes a serving cell group ID (servCellGroupId) for identifying a serving cell, an indication of serving cells included in the serving cell group (ServCel), common parameters for the serving cell group (CommonParametersForServCellGroupConfig), and a list of candidate cells related to the serving cell (CandidateCellList).

The serving cell group ID (servCellGroupId) may start from 0, for example. For the serving cell (ServCel), any serving cell (SpCell/SCell) is configured when option 2-1-1 is applied, an SpCell is configured when option 2-1-2 is applied, and an SCell is configured when option 2-1-3 is applied. Each candidate cell corresponds to the same frequency as that of the serving cell and has a PCI different from that of the serving cell.

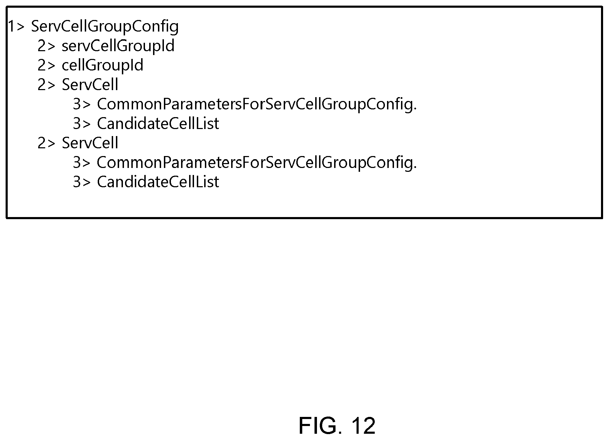

FIG. 12 is a diagram to show a second example of a serving cell group configuration (ServCellGroupConfig). A description will be omitted for parts similar to those in the example in FIG. 11. FIG. 12 is different from the example in FIG. 11 in that a serving cell group configuration includes cellGroupId and include a plurality of serving cell indications "ServCell" in FIG. 12. In FIG. 12, the serving cell group configuration is present for each cell group configuration (CellGroupConfig) and may correspond to a plurality of serving cells. FIG. 12 may correspond to option 2-1-2.

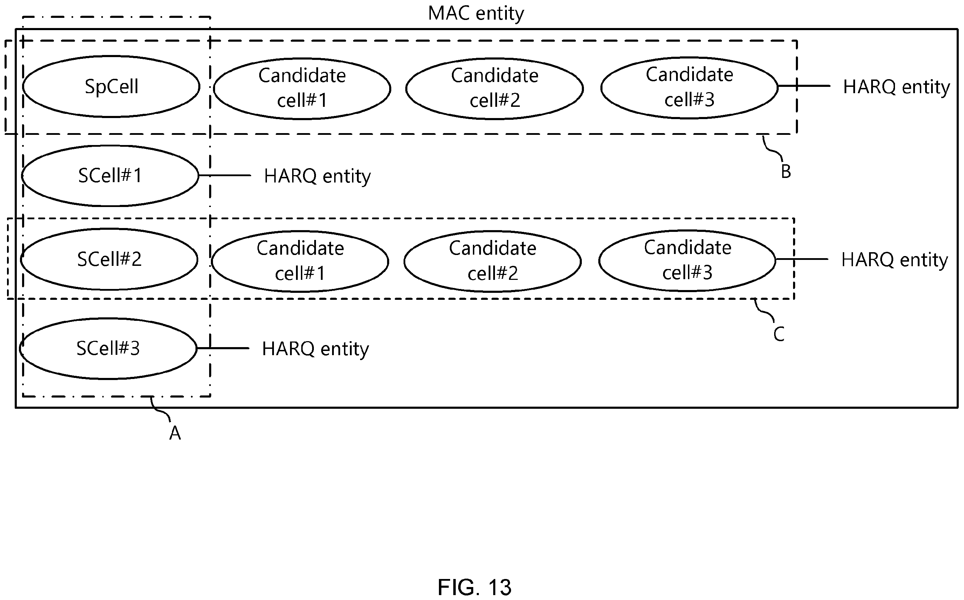

FIG. 13 is a diagram to show an example of a MAC entity / HARQ entities in the second embodiment. The frame with A in FIG. 13 shows a cell group including one SpCell and three SCells. Each cell in A corresponds to a different frequency. The frame with B in FIG. 13 indicates a cell group for L1/L2 inter-cell mobility operation. The serving cell of the cell group is the SpCell. The cells in B correspond to the same frequency. The frame with C in FIG. 13 indicates a cell group for L1/L2 inter-cell mobility operation. The serving cell of the cell group is SCell #2. The cells in C correspond to the same frequency. For FIG. 13, a description will be omitted for parts similar to those in FIG. 9.

In another example, the cells (SpCell/Scells, Candidate cells) may correspond to the same frequency even in a case of L1/L2 inter-cell mobility. The cells may share the same HARQ entity for scheduling.

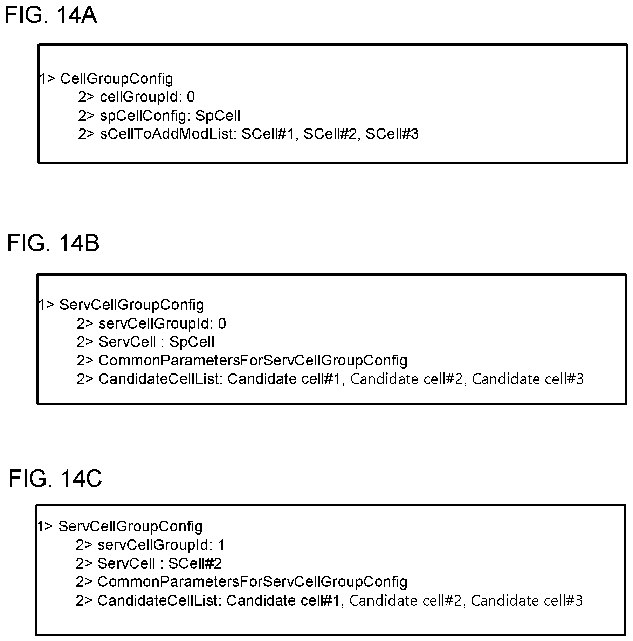

FIG. 14A to FIG. 14C are each a diagram to show an example of a cell group configuration corresponding to FIG. 13. FIG. 14A to FIG. 14C correspond to cells (cell groups) in the frames with A, B, and C in FIG. 13, respectively. "cellGroupId," "new indicator for cell group purpose," "spCellConfig," and "sCellToAddModList" in FIG. 14A correspond to the cells (cell group) in the frame with A in FIG. 13. "servCellGroupId," "ServCell," "CommonParametersForServCellGroupConfig," and "CandidateCellList" in FIGS. 14B and 14C correspond to the cells (cell groups) in the frames with B and C in FIG. 13.

In the second embodiment, by using new configuration information (serving cell group configuration) different from configuration information for CA/DC, flexible configuration is possible for L1/L2 inter-cell mobility.

### <Third Embodiment>

When candidate cell #y at a certain frequency is changed with serving cell #x (serving cell #x is changed with candidate cell #y) by a MAC CE / DCI (L1/L2 inter-cell mobility), the UE may receive a new configuration as the serving cell configuration (ServingCellConfig) of candidate cell #y. The UE may control transmission/reception in candidate cell #y changed to be the serving cell, based on the serving cell configuration. In the L1/L2 inter-cell mobility, the UE may receive a MAC CE / DCI including a new field indicating recreated indices for cells for each new cell group, for example. The recreated index corresponds to at least part of the PCI and may be an index created for the candidate cell. The third embodiment may be applied in combination with the first/second embodiment.

### {Option 3-1}

The cell group of serving cell #x may be released, and the configurations of all the other candidate cells in the corresponding cell group may be deleted (flushed, cleared). The UE may receive the cell group configuration of new serving cell #y in response to RRC reconfiguration.

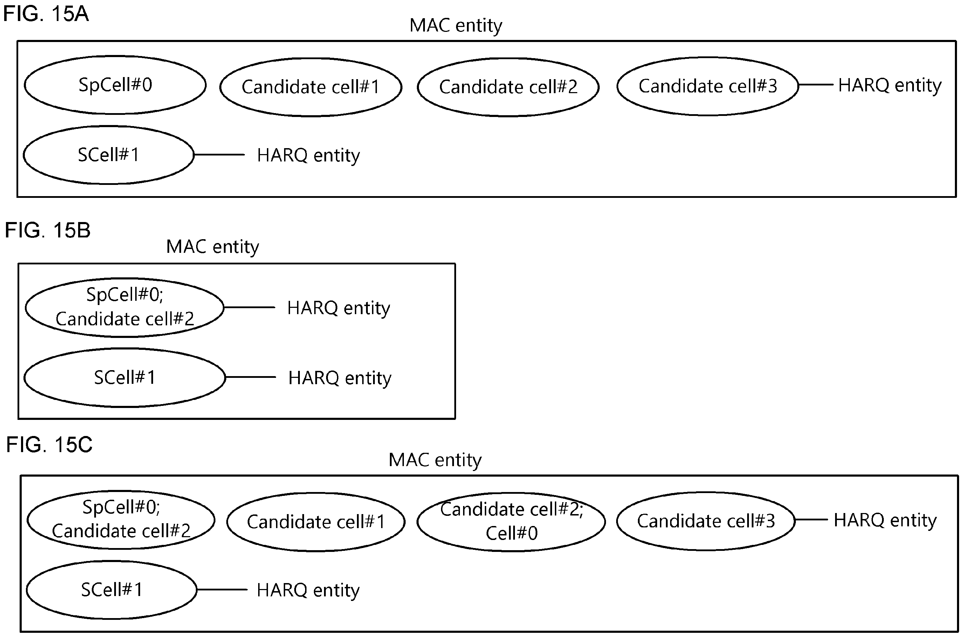

FIG. 15A is a diagram to show an example of a cell configuration before L1/L2 inter-cell mobility. In FIG. 15A, a cell group including SpCell #0, which is a serving cell, Candidate cellls #1 to #3, which are candidate cells, and SCell #1 is configured. SpCell #0 corresponds to serving cell #x described above, and candidate celll #2 corresponds to candidate cell #y described above. FIG. 15B is a diagram to show an example of a cell configuration after L1/L2 inter-cell mobility in option 3-1. In FIG. 15B, the cell group is released, the configurations of Candidate cellls #1 to #3 are deleted, and Candidate celll #2 is configured as a serving cell.

### {Option 3-2}

The cell group of serving cell #x may be held while update for exchanging the configuration of cell #x and the configuration of cell #y may be performed. In other words, cell #y is changed to be a serving cell of the cell group while cell #x is changed to a candidate cell of the cell group in place of cell #y. The candidate cell is included in the candidate cell list of the cell group configuration.

Similarly to option 3-1, an example of a case where FIG. 15A is applied as a cell configuration before L1/L2 inter-cell mobility will be described. FIG. 15C is a diagram to show an example of a cell configuration after L1/L2 inter-cell mobility in option 3-2. In FIG. 15C, the cell group is not released, the configuration of SpCell #0 and the configuration of Candidate celll #2 are exchanged, Candidate celll #2 serves as a serving cell, and SpCell #0 (Cell #0) serves as a candidate cell.

According to the third embodiment, when the candidate cell is changed to be a serving cell, it is possible to perform flexible configuration for the candidate cell (serving cell).

### <Analysis>

A purpose of reusing a CA/DC framework as in the first embodiment or introducing new configuration information "ServCellGroupConfig" as in the second embodiment is to configure a plurality of candidate cells associated with a serving cell in L1/L2 inter-cell mobility. In this way, the UE can receive the configuration of each candidate cell.

When the UE is indicated to change the serving cell at a certain frequency to candidate cell #y, by L1/L2 signaling, candidate cell #y is changed to be the current serving cell (refer to the third embodiment). The UE may then receive a new configuration "ServCellGroupConfig" for candidate cell #y (refer to the second embodiment). In the present disclosure, a serving cell may be replaced with a cell that transmits a PDSCH.

A new DCI field having the number of bits corresponding to the number of candidate cells may be added. For example, when seven candidate cells are configured for a new cell group corresponding to serving cell #x, a three-bit DCI field may be added to indicate change of a serving cell of self-scheduling. When three candidate cells are configured for a new cell group to provide cell #x, two-bit DCI may be added to indicate change of a serving cell of self-scheduling.

When cross-carrier scheduling is configured, a carrier indicator field (CIF) in DCI indicates a target CC, and a new DCI field may indicate candidate cells configured in a new cell group corresponding to the target CC. The number of bits of the new DCI field is determined by the maximum value of the numbers of candidate cells configured for respective corresponding new cell groups (MCG/SCG) in CA/DC.

In cross-carrier scheduling, when three candidate cells in a new cell group is configured at a certain frequency (CC) and seven candidate cells in the new cell group are configured at a different frequency (CC), three bits are needed for a new DCI field. In other words, the number of bits corresponding to the maximum number of candidate cells among the numbers of candidate cells in the cell groups of the respective CCs is applied to the new DCI field. When the target CC is a frequency (CC) having three candidate cells, only the values 0, 1, 2, and 3 may be used. The original cell groups may be released or updated according to the example of the third embodiment.

### <UE Capability>

The UE may transmit (report), to a network (base station), UE capability information indicating whether to support at least one of the processes in the present disclosure. At least one of the processes in the present disclosure may be applied only to the UE that has transmitted information of specific UE capability or the UE that supports the specific UE capability. The UE may receive information indicating/configuring at least one of the processes in the present disclosure by DCI / MAC CE / higher layer signaling (for example, RRC) or the like. The information may correspond to the UE capability information transmitted by the UE. The UE capability information may be at least on of (1) to (8) below.

(1) Whether to support reuse of a CA/DC framework for a new cell group purpose (L1/L2 inter-cell mobility).
(2) Whether to support an explicit/implicit indication of a new cell group purpose (indication of whether it is for CA/DC operation or L1/L2 inter-cell mobility operation).
(3) Whether to support a configuration of a new serving cell group in L1/L2 inter-cell mobility (ServCellGroupConfig).
(4) Whether to support a configuration of a plurality of candidate cells associated with a serving cell in L1/L2 inter-cell mobility.
(5) Whether to support at least one UE capability of (1) to (4) above for any serving, only SpCell, or only SCell.
(6) The maximum number of candidate cells supported for each cell group corresponding to any serving cell / SpCell / SCell, for L1/L2 inter-cell mobility.
(7) The maximum number of cell groups supported.
(8) The maximum number of candidate cells supported in all the cell groups (per MCG/SCG).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

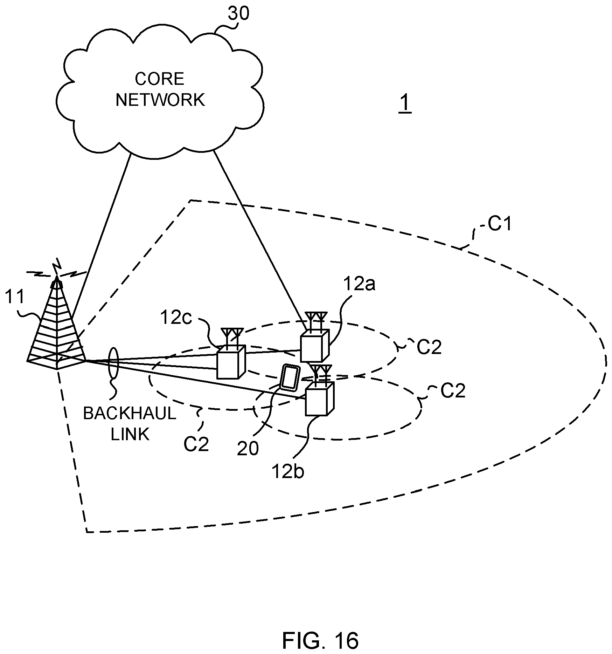

FIG. 16 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

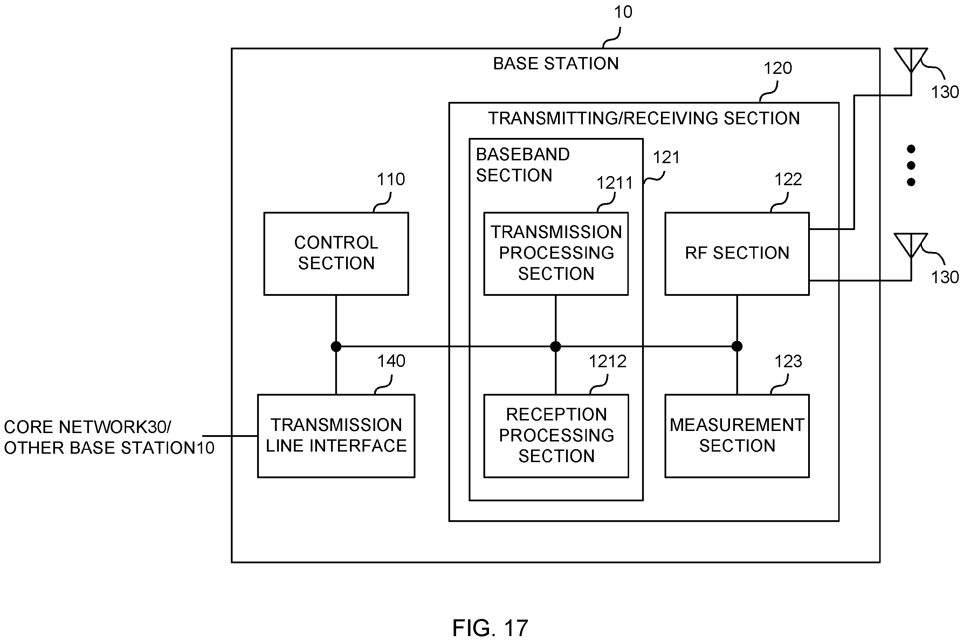

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit cell group configuration information including an indication indicating whether it is for operation for at least one of carrier aggregation and dual connectivity or for operation for inter-cell mobility using at least one of layer 1 and layer 2.

The control section 110 may control transmission/reception in a cell in a cell group indicated by the configuration information

### (User Terminal)

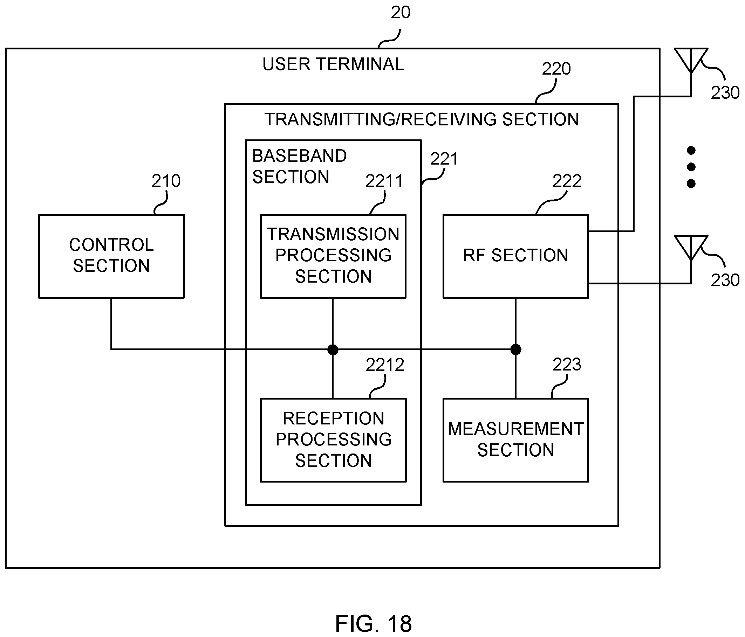

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive cell group configuration information including an indication indicating whether it is for operation for at least one of carrier aggregation and dual connectivity or for operation for inter-cell mobility using at least one of layer 1 and layer 2. The indication may be a cell group ID.

The control section 210 may control transmission/reception in a cell in a cell group indicated by the configuration information.

The transmitting/receiving section 220 may receive configuration information related to a serving cell group to be used for operation for inter-cell mobility using at least one of layer 1 and layer 2. The control section 210 may control transmission/reception in a cell in a cell group indicated by the configuration information related to the serving cell group.

The transmitting/receiving section 220 may receive a serving cell configuration of the candidate cell when the candidate cell is changed to be a serving cell by the inter-cell mobility using at least one of layer 1 and layer 2. The control section 210 may control transmission/reception in the candidate cell changed to be the serving cell, based on the serving cell configuration.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

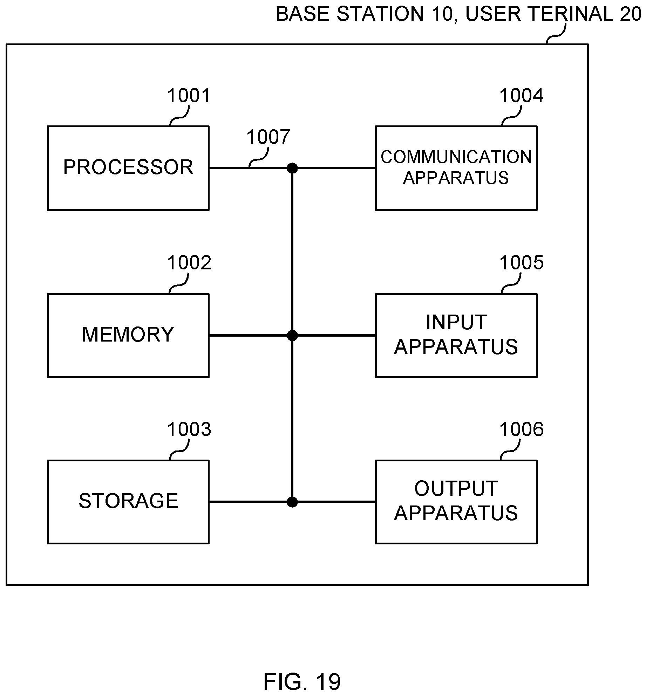

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

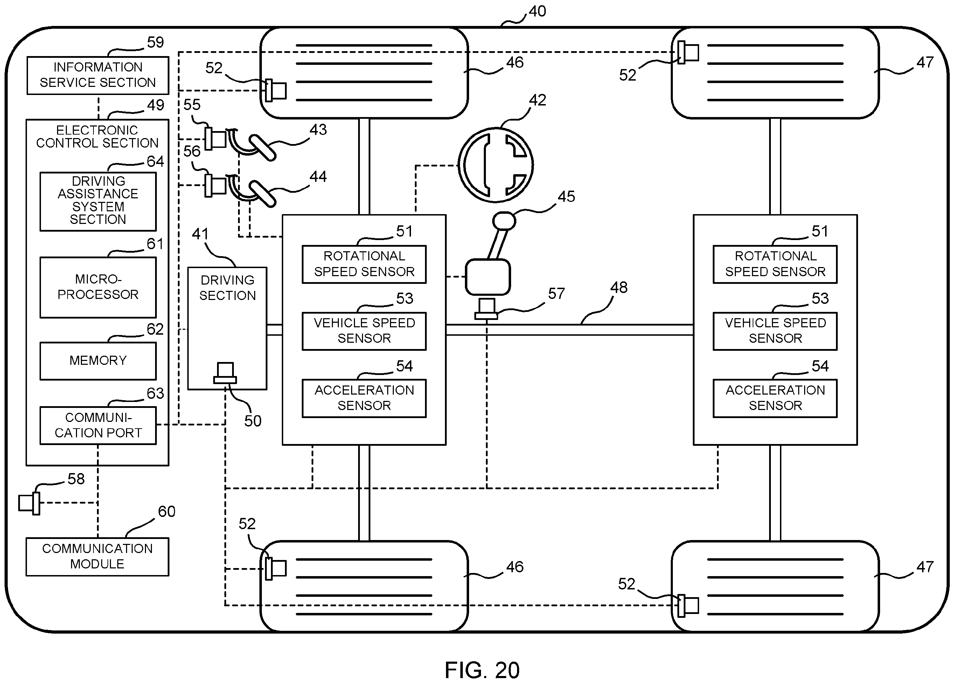

FIG. 20 is a diagram to show an example of a vehicle according to one embodiment. As shown in FIG. 20, a vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, the above-describe base station 10 or user terminal 20 or the like (may function as the base station 10 or user terminal 20 or the like).

The communication module 60 may transmit signals from the above-described various sensors 50 to 58 input to the electronic control section 49 and information obtained based on these signals, to the external apparatus via radio communication.

The communication module 60 receives various pieces of information (traffic information, signal information, inter-vehicle distance information, and the like) transmitted from the external apparatus, and displays the various pieces of information on the information service section 59 included in the vehicle. The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives cell group configuration information including an indication indicating whether it is for operation for at least one of carrier aggregation and dual connectivity or for operation for inter-cell mobility using at least one of layer 1 and layer 2; and
a control section that controls transmission/reception in a cell in a cell group indicated by the configuration information.

2. The terminal according to claim 1,
wherein the indication is a cell group ID.

3. The terminal according to claim 1 or 2, wherein
the receiving section receives configuration information related to a serving cell group to be used for operation for inter-cell mobility using at least one of layer 1 and layer 2, and
the control section controls transmission/reception in a cell in a cell group indicated by the configuration information related to the serving cell group.

4. The terminal according to any one of claims 1 to 3, wherein
when a candidate cell is changed to a serving cell by the inter-cell mobility using at least one of layer 1 and layer 2, the receiving section receives a serving cell configuration of the candidate cell, and
the control section controls transmission/reception in the candidate cell changed to the serving cell, based on the serving cell configuration.

5. A radio communication method for a terminal, the radio communication method comprising:
receiving cell group configuration information including an indication indicating whether it is for operation for at least one of carrier aggregation and dual connectivity or for operation for inter-cell mobility using at least one of layer 1 and layer 2; and
controlling transmission/reception in a cell in a cell group indicated by the configuration information.

6. A base station comprising:
a transmitting section that transmits cell group configuration information including an indication indicating whether it is for operation for at least one of carrier aggregation and dual connectivity or for operation for inter-cell mobility using at least one of layer 1 and layer 2; and
a control section that controls transmission/reception in a cell in a cell group indicated by the configuration information.
